# EUROPEAN PATENT SPECIFICATION

(11) **EP 1 901 955 B1**
(45) Date of publication and mention of the grant of the patent: **16.09.2009**
(21) Application number: 06753330.7
(22) Date of filing: 03.07.2006
(51) Int. Cl.: B62D 25/20

(54) **A FLOOR PLATE FOR A VEHICLE**
BODENPLATTE FÜR FAHRZEUG
PLAQUE DE PLANCHER POUR UN VEHICULE

(30) Priority: 04.07.2005 DK 200500158 U
(43) Date of publication of application: 26.03.2008
(73) Proprietor: Handi Mobil ApS, 7400 Herning (DK)
(72) Inventor: THOMSEN, Erik, DK-7400 Herning (DK)
(74) Representative: Inspicos A/S
(86) International application number: PCT/DK2006/000393
(87) International publication number: WO 2007/003198

(56) References cited:
- EP-A- 1 495 946
- WO-A-01/38127
- WO-A-97/17223
- GB-A- 2 344 319

## Description

The present invention relates to a floor plate adapted to be fastened to the bottom of a vehicle, and an element for use in the floor plate.

Floor plates for fastening to the bottom of vehicles are used for e.g. increasing the versatility in arranging seats/chairs etc. in these vehicles. These floor plates normally have a wide range of possibilities for fastening elements to its surface. The fastening means are used for fastening e.g. chairs and may either be in the form of oblong recesses in the full length of the floor plate or in the form of a pattern of more local recesses for the same purpose.

A particular use is the adaptation of the vehicle for a particular fastening of e.g. aids for disabled persons, such as wheel chairs and the like.

These floor plates, however, are equally suited for providing a cargo hold with a very versatile selection of fastening possibilities for all sorts of goods.

The floor plates naturally are useful in cars, busses, trucks, trains, boats, ships, ferries as well as airplanes.

The present invention relates to the gluing of such a floor plate to the bottom of the vehicle, as it rarely is an advantage to drill holes in the bottom of the vehicle and thereby both reduce the strength of the bottom but also trigger e.g. corrosion.

Such floor plates and gluing hereof may be seen in e.g. EP-A-1 495 946, WO01/38127, GB 2344319, WO97/17223, EP 1495946, WO99/25601 and WO 97/17223, any of which document can be taken as basis for the preamble features of independent claim 1.

As floor plates of this type, however, must fulfil certain requirements as to their strength, it is difficult to glue the floor plate to the bottom while obtaining a sufficient strength. The present invention provides a solution to that problem.

In its main aspect, the invention relates to a floor plate attached to the bottom of a vehicle, the floor plate comprising a number of parallel elements positioned beside each other, wherein at least one of the parallel elements has an upper side and a lower side, the upper side having means for attaching to or engaging with chairs or goods, the element being, at its lower side, glued to the bottom of the vehicle,
where the at least one element has, at or in its lower side, at least one recess extending away from, i.e. into the element in the direction of the upper side, a general plane of the lower side of the element, the recess having a first part, having a first predetermined width, and a second part, having a second predetermined width and being positioned closer to the bottom or the plane, the second width being smaller than the first width, and
where a layer of glue fixing the element(s) to the bottom extends into the recess and over at least the first and the second part.

It may be said that the first and second parts are present, at least partly, in a plane perpendicular to the general plane of the lower side of the element.

In this manner, the lower side is not only glued to the bottom, but the recesses' first and second parts will define narrowings or narrow parts, which the glue must pass in order to loosen the element from the vehicle bottom/floor. In this manner, a much safer fastening of the element to the bottom/floor is obtained.

It is preferred that the lower side of the element is plane, at least around the recess(es), as this will aid in forcing the glue into the recess(es). In this connection, the general plane of the lower side may be a plane defined by the plane surroundings of the recess(es). Otherwise, the general plane may be the plane defined, in relation to the element, by a plane/flat support, on which the element lies on its lower side.

In order to force the glue into the recess(es) with the highest certainty, it is also preferred that the distance between the bottom/floor and the element(s), at the recess(es) of the element(s) is no larger than 10mm, when the element is positioned correctly without adding the glue. In this manner, the element may be attached to bottoms with a non-plane profile, if it is ensured that the recess(es) is/are glued to higher-lying parts of the floor, and that the lower-lying parts of the floor lie below other parts of the element.

Normally, the recess(es) will extend perpendicularly to the general plane of the lower side, but this it not a requirement. In addition, the widths normally will be measured as the shortest width at the two distances from the lower side.

In one embodiment, the at least one element is hollow, and the recess extends from the lower side of the element and to the interior of the hollow element. In that situation, the hollowness of the element has an internal surface. There, the first part, which is the wider part, may form a part of the inner surface. The glue thus extends into the hollowness and therefore will experience the remainder of the recess, which thus will be narrower than the remainder of the hollowness, as a narrowing.

In a preferred embodiment, at least one recess has a number of pairs of a first part and a second part, within each pair of parts:
- the first part has a first predetermined with and the second part has a second predetermined width, the second width being smaller than the first width,
- the second part is positioned closer to the bottom than the first part,
the glue extending over all parts of all pairs.

The more narrowings of this type, which the glue must be drawn through, the larger the force which may be withstood by the glue.

A suitable manner of preparing the element is to provide the recess as an oblong recess, where at least one pair of a first and a second part is shaped as an oblong/elongate projection extending along the longitudinal axis of the recess. In this manner, the element may be extruded. It also has the advantage that the recess then may extend along the full length of the element.

Naturally, the size of the narrowing has an influence on the forces, which the glue may resist/withstand. In one embodiment, the first width is at least 5% larger than the second width, such as at least 10%, preferably at least 15%.

In another embodiment, the recess extends a predetermined depth into the element, where the depth is between 30% and 300% of the first width, such as 50-300%, preferably 100-250%. In the situation where the element is hollow, the depth may be determined as the thickness of the material of the element at the recess, in that "height" inside the hollowness is of less importance in this respect.

Another interesting parameter is the rise, which the glue actually has to pass in order to be drawn out of or from the recess. This rise, naturally, preferably is large. Thus, preferably the first part is positioned at a first distance from the general plane, where the second part is positioned at a second distance from the general plane, and where a difference in the first and second distances (the difference in physical distance in the plane) is at the most three times a difference between the first and the second width. Actually, this rise may be as large as desired. Ultimately, the narrowing between the second, narrow, part and the first, wider, part may be a plane extending substantially in the direction of the general plane. In this manner, a wide blob of glue must be drawn through a more narrow part without the intermediate part of the recess working as a funnel.

In one embodiment, a first of the at least one element is fixed to the bottom between two other elements, the first element not being directly attached to, engaging, or touching the two other elements. As the elements are not directly connected to each other, they may be individually replaced without having to remove or cut physical connections to other elements or the bottom. One way of loosening the glue would be to draw e.g. a piano string or another bendable element along the length of the element to cut the glue.

Another advantage of this embodiment may be seen when the vehicle chassis is temporarily deformed. This may occur during an accident or when a car is parked with one wheel on the pavement. Modern cars are built to be able to bend slightly. In this connection, it would be an advantage, if also the floor plate could follow these movements of the vehicle instead of being a stiff unit creating tensions in the vehicle.

In a floor plate where the elements are not considerably connected to each other, other than through the gluing to the floor, the elements will be slightly movable in all directions and thereby be able to adapt to the movements of the bottom of the vehicle. In this manner, the vehicle is protected against unintentional tensions both during normal use and at accidents.

Another embodiment relates to a floor plate which is attached to the bottom also with at least one fastening element extending through the bottom and into at least one recess, the fastening element having a surface engaging the first and/or second parts. The surface of this fastening element may itself have projections engaging any projections of the recess. If the recess ends in a hollowness, the hollowness will be able to accommodate a part of the length of the fastening element, so that the same element may be used with different heights of elements and vehicle floors/bottoms.

In a preferred embodiment, the layer of glue has a Shore A hardness of 40-75, preferably 50-60, as the glue together with the bottom and the element provide a sandwich structure, where the bottom normally is thinner and more easily deformable than the element. The glue thus preferably is adapted to follow a deformation of the bottom but still fasten the element and the bottom to each other.

In addition, the glue preferably is water-based, as all work with two-component glues or epoxy based glues often requires complicated safety precautions for those handling such glues. Often, work with such glues must be performed in separate rooms and fresh air must be provided. Also, it may be required for the persons to wear safety suits. Contrary to that, when using water based glues it is possible for others to work in the same room and to carry out the other tasks related to the providing of the elements for the floor plate.

In another aspect, the invention relates to an element for use in the above-mentioned floor plate, the element having an upper side and a lower side, the element has, in its lower side, at least one recess extending away from a general plane of the lower side, the recess having a first part, having a first predetermined width, and a second part which is positioned closer to the bottom, the second part having a second predetermined width, the second width being smaller than the first width.

As mentioned above, it may be said that the first and second parts are present in a plane perpendicular to the general plane.

This element naturally may have all the above-mentioned different features and advantages, in any suitable combination.

A third aspect of the invention relates to a method of fastening the above-mentioned element to the bottom of a vehicle, the method comprising:
- adding glue to the bottom and/or the lower side of the element, and
- forcing the element and the bottom toward each other in order to ensure that glue enters the recess(es) and over at least the first and the second part of the recess(es).

This method could also be combined with the use of the above-mentioned fastening elements, where e.g. these elements are fixed through the bottom and up into the recesses after the glue has been added and the forcing/compression has taken place. In this manner, the fastening elements may be used for holding the element in place both horizontally (to obtain the correct positioning of the means for fastening the seats/goods) and/or vertically (to maintain the compression until the glue has dried).

The preferred embodiment of the invention will be described below with reference to the drawing, wherein:
- Figure 1 illustrates a cross section through an element for use in a floor plate,
- Figure 2 illustrates an enlargement of a part of the element of figure 1, and
- Figure 3 illustrates an element for further fastening or position control of the element of figure 1.

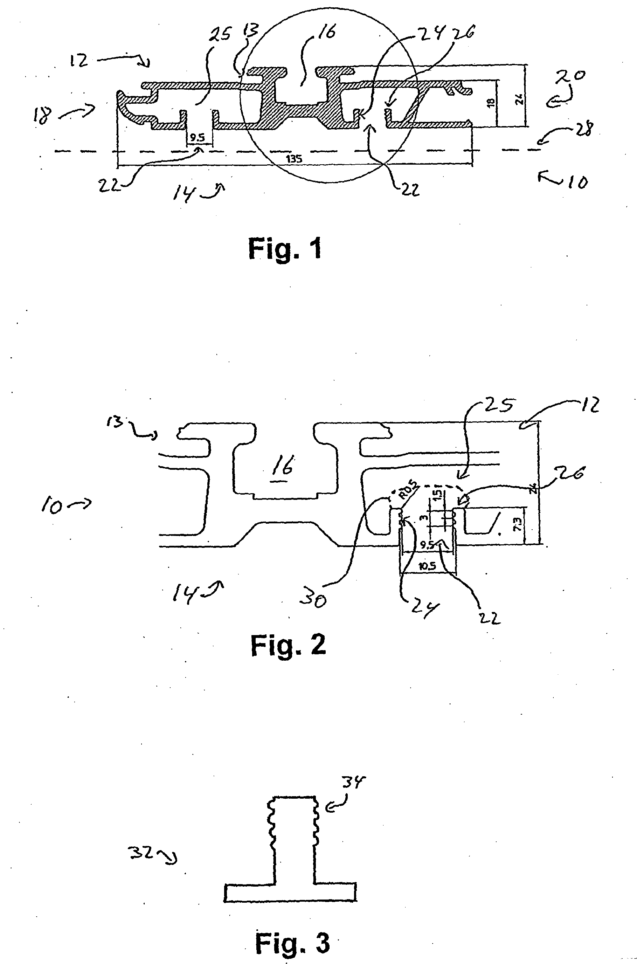

The element 10 of figure 1 has an upper side 12 and a lower side 14. The upper side 12 has means 16 for fastening chairs or goods (not illustrated). These means 16 normally are recesses or oblong holes, normally provided in the full length of the element 10, and normally fastening means, such as bolts or the like, may engage thereto to fasten or fix chairs or goods, e.g.

The element 10 also has, at its side flanges 18/20, means, here in the form of tongue and groove connections/joints, for engaging neighbouring elements. These means are not required for the strength of the element 10 or the fastening to the bottom/floor, but they are advantageous in connection with the actual gluing process, where these means 18/20 help positioning the elements 10 in relation to each other. In this manner, it may be avoided that elements arrive at different heights or move in relation to each other, so that the means 16 get wrong mutual distances/positions. Below, an alternative method of obtaining this is described.

At the upper side 12, the element 10 has a number of protrusions 13, which may be used for fastening an upper layer, such as wood plates/slabs or carpets, which will be the actual surface of the floor plate. Alternatively, these protrusions 13 could be replaced by a more plane surface, which in itself may be the actual surface of the element 10 or the floor plate.

At the lower side 14, the element 10 has a number of recesses 22, extending in the direction of the longitudinal axis of the element. These protrusions 22 have therein a number of protrusions 24 as well as an upper surface 26, which opens the recess 22 into a hollowness 25 in the element 10.

A protrusion 24 is formed by a part of the recess 22 with a small width or a smaller cross section than a part further up into the recess, where the width or the cross section is larger.

These protrusions 24 are provided on both sides of the recess 22 and define a number of narrowings which in themselves will provide resistance, if extreme forces attempt to pull the element 10 away from the bottom 28. The function of the recesses 22, the protrusions 24, and/or the surface 26 may be seen from figure 2, illustrating an enlargement (see the ring in figure 1) of these elements with a contour of the glue fastening the element 10 to the bottom 28 of the vehicle.

It is preferred that a number of protrusions 24 are provided along the length/depth of the recess, as the number of protrusions covered by the glue takes part in the definition of the strength/force which the fastening of the element 10 to the bottom 28 is able to withstand.

It is also preferred that the protrusions 24 are provided in pairs in the recess 22, so that these together form a larger narrowing than a single protrusion would.

The actual gluing process may comprise that the glue is provided on the bottom 28 of the element 10, where after the element 10 is forced toward the bottom 28, so that the glue is forced up into the recess 22 and over the protrusions 24 and/or the surface 26. The glue will thus (see the contour 30 in figure 2) extend into the recess 22 and over at least one, but preferably more, of the protrusions 24 and preferably also the surface 26, if such a surface is present.

In this manner, the glue, when dried, will engage the protrusions 24 and/or the surface 26. Even in case of an accident, where strong forces act on the means 16 due to large accelerations of the chairs/goods, the glue will not deform to a degree, where it may be drawn away from the narrowings of the recess 22.

In order to ensure that the glue actually extends sufficiently far into the recess 22, it is preferred that the bottom 28, at or opposed to the recess 22, has the same overall shape (normally flat/plane), and that the part of the bottom 28, which lies opposite the recess 22, is a part, which the element 10 would abut, if the glue was not there. The bottom 28 may be corrugated, e.g., with a part having surfaces lying higher and surfaces or recesses lying lower. In that situation, it would be preferable, if at least a part of the recesses 22 actually abut the higher lying surfaces so that it is ensured that the glue is forced into the recesses 22, when the element 10 is forced toward the bottom 28.

A suitable type of glue for this type of gluing is a type, which may be applied in a thick layer, such as Handimastic PMS, which is a water-based glue with a density of approx. 1.40, where a 2 mm layer dries in approx. 24 hours (23°C, 50% humidity), which has a Shore A hardness of 60, an elongation at break of 250%, has a modulus at break of 2.2MPa and which has a general modulus of 1.26 MPa.

A glue or adhesive of this type, having a suitable modulus and hardness and additionally has a suitable elongation at/before break, will be readily usable.

In another embodiment, the element 10 does not have the means 18/20 and, thus, does not engage with the neighbouring elements 10. This has the advantage that the element 10 may then be loosened from the bottom 28 and be removed without having to remove the neighbouring elements 10. This removal may simply be obtained by introducing e.g. a piano string at one end of the element 10 and under its lower side 14, where after this string is drawn to the other end of the element 10, resulting in a complete loosening of the element 10.

In yet another embodiment, the floor is additionally fastened with elements 32 (figure 3) which extend through the bottom 28 and up into the recess 22. These elements 32 have protrusions 34 dimensioned to engage with the protrusions 24 and possibly extend into the hollowness 25.

These elements 32, naturally, may be used for providing an increased strength in relation to the fastening of the element 10 to the bottom 28, but they may also simply be used for maintaining the pressure of the element 10 toward the bottom 28 and the position of the element 10 in relation to the bottom 28 and other elements 10, until the glue has dried.

## Claims

1. A floor plate attached to the bottom (28) of a vehicle, the floor plate comprising a number of parallel elements (10) positioned beside each other, wherein at least one of the parallel elements has an upper side (12) and a lower side (14), the upper side having means (16) for attaching to or engaging with chairs or goods, the element (10) being, at its lower side (14), glued to the bottom (28) of the vehicle,
**characterized in that** the at least one element (10) has, at or in its lower side (14), at least one recess (22) extending away from a general plane of the lower side (14) of the element (10) the recess (22) having a first part, having a first predetermined width, and a second part, having a second predetermined width and being positioned closer to the bottom (28), the second width being smaller than the first width, and that
a layer of glue fixing the element(s) (10) to the bottom extends into the recess (22) and over at least the first and the second part.

2. A floor plate according to claim 1, wherein the at least one elements (10) is hollow, and where the recess (22) extends from the lower side (14) of the element (10) and to the interior of the hollow element.

3. A floor plate according to claim 2, wherein the hollowness of the element (10) has an inner surface (26), and where the first part forms part of the inner surface (26).

4. A floor plate according to any of the preceding claims, wherein at least one recess (22), in the plane, has a number of pairs of a first part and a second part, within each pair of parts:
- the first part has a first predetermined with and the second part has a second predetermined width, the second width being smaller than the first width,
- the second part is positioned closer to the bottom (28) than the first part,
the glue extending over all parts of all pairs.

5. A floor plate according to any of the preceding claim, wherein the recess (22) is oblong, and where at least one pair of a first and a second part is shaped as an oblong/elongate projection (24) in the recess (22).

6. A floor plate according to any of the preceding claims, wherein the first width is at least 5% larger than the second width.

7. A floor plate according to any of the preceding claims, wherein the recess (22) extends a predetermined depth into the element (10), where the depth is between 30% and 300% of the first width.

8. A floor plate according to any of the preceding claims, wherein the first part is positioned in a first distance from the general plane, where the second part is positioned in a second distance from the general plane, and where a difference in the first and second distances is at the most three times a difference between the first and the second width.

9. A floor plate according to any of the preceding claims, wherein a first of the at least one element (10) is fixed to the bottom (28) between two other elements (10), the first element (10) not being directly attached to, engaging, or touching the two other elements (10).

10. A floor plate according to any of the preceding claims, the floor plate being attached to the bottom (28) with at least one fastening element (32) extending through the bottom (28) and into at least one recess (22), the fastening element (32) having a surface engaging the first and second parts.

11. A floor plate according to any of the preceding claims, wherein the layer of glue has a Shore A hardness of 40-75.

12. An element (10) for use in the floor plate according to any of the preceding claims, **characterized in that** the element (10) having an upper side (12) and a lower side (14) and in its lower side (14) has at least one recess (22) extending away from a general plane of the lower side, the recess (22) having a first part, having a first predetermined width, and a second part which is positioned closer to the bottom, the second part having a second predetermined width, the second width being smaller than the first width.

13. A method of fastening an element (10) according to claim 12 to the bottom (28) of a vehicle, the method **characterized in** :
- adding glue to the bottom (28) and/or the lower side (14) of the element (10),
- forcing the element (10) and the bottom (28) toward each other in order to ensure that glue enters the recess(es) (22) and over at least the first and the second part of the recess(es) (22).

## Patentansprüche

1. Bodenplatte, die an dem Boden eines Fahrzeugs angebracht ist, wobei die Bodenplatte eine Anzahl von parallelen Elementen aufweist, die nebeneinander angeordnet sind, wobei wenigstens eines der parallelen Elemente eine obere Seite und eine untere Seite aufweist, wobei die obere Seite mit Mitteln zum Befestigen an oder zum Eingriff mit Sitzen oder Gegenständen ausgestattet ist, wobei das Element an seiner unteren Seite an den Boden des Fahrzeugs angeklebt ist, wobei das wenigstens eine Element an oder in seiner unteren Seite wenigstens eine Ausnehmung aufweist, die sich von einer Hauptebene der unteren Seite des Elementes weg erstreckt, wobei die Ausnehmung über einen ersten Teil, der mit einer ersten vorbestimmten Breite ausgebildet ist, und über einen zweiten Teil verfügt, der mit einer zweiten vorbestimmten Breite ausgebildet und näher an dem Boden angeordnet ist, wobei die zweite Breite schmaler als die erste Breite ist, und bei der eine Klebstoffschicht, die das oder jedes Element an dem Boden befestigt, sich in die Ausnehmung hinein und über wenigstens den ersten und den zweiten Teil erstreckt.

2. Bodenplatte nach Anspruch 1, bei der das wenigstens eine Element hohl ist und bei der sich die Ausnehmung von der unteren Seite des Elements bis zu der Innenseite des hohlen Elements erstreckt.

3. Bodenplatte nach Anspruch 2, bei der die Hohlheit des Elementes eine innere Oberfläche aufweist und bei der der erste Teil einen Teil der inneren Oberfläche bildet.

4. Bodenplatte nach einem der vorangehenden Ansprüche, bei der wenigstens eine Ausnehmung in der Ebene über eine Anzahl von Paaren eines ersten Teiles und eines zweiten Teiles verfügt, wobei innerhalb jedes Paares von Teilen
- der erste Teil eine erste vorbestimmte Breite und der zweite Teil eine zweite vorbestimmte Breite aufweist, wobei die zweite Breite schmaler als die erste Breite ist,
- der zweite Teil näher an dem Boden als der erste Teil angeordnet ist,
wobei sich der Klebstoff über alle Teile aller Paare erstreckt.

5. Bodenplatte nach einem der vorangehenden Ansprüche, wobei die Ausnehmung rechteckig ist und wobei wenigstens ein Paar aus einem ersten und aus einem zweiten Teil als ein rechteckiger/länglicher Vorsprung in der Ausnehmung ausgebildet ist.

6. Bodenplatte nach einem der vorangehenden Ansprüche, bei der die erste Breite wenigstens 5% größer als die zweite Breite ist.

7. Bodenplatte nach einem der vorangehenden Ansprüche, bei der sich die Ausnehmung bis zu einer vorbestimmten Tiefe in das Element erstreckt, wobei die Tiefe zwischen 30% und 300% der ersten Breite liegt.

8. Bodenplatte nach einem der vorangehenden Ansprüche, bei der der erste Teil in einem ersten Abstand von der Hauptebene angeordnet ist, wobei der zweite Teil in einem zweiten Abstand von der Hauptebene angeordnet ist und wobei eine Differenz zwischen dem ersten Abstand und dem zweiten Abstand höchstens das Dreifache einer Differenz zwischen der ersten Breite und der zweiten Breite beträgt.

9. Bodenplatte nach einem der vorangehenden Ansprüche, bei der ein erstes Element des wenigstens einen Elementes zwischen zwei weiteren Elementen an dem Boden angebracht ist, wobei das erste Element nicht direkt an den beiden anderen Elementen angebracht ist oder nicht mit diesen in Eingriff ist oder diese berührt.

10. Bodenplatte nach einem der vorangehenden Ansprüche, wobei die Bodenplatte über wenigstens ein Befestigungselement mit dem Boden verbunden ist, das sich durch den Boden und in wenigstens eine Ausnehmung erstreckt, wobei das Befestigungselement über eine Oberfläche verfügt, die mit den ersten und zweiten Teilen in Eingriff ist.

11. Bodenplatte nach einem der vorangehenden Ansprüche, bei der die Klebstoffschicht eine Shore A Härte von 40-75 aufweist.

12. Element zur Verwendung bei der Bodenplatte gemäß einem der vorangehenden Ansprüche, wobei das Element über eine obere Seite sowie über eine untere Seite verfügt und in seiner unteren Seite wenigstens eine Ausnehmung aufweist, die sich von einer Hauptebene der unteren Seite weg erstreckt, wobei die Ausnehmung über einen ersten Teil, der mit einer ersten vorbestimmten Breite ausgebildet ist, und über einen zweiten Teil verfügt, der näher an dem Boden angeordnet ist, wobei der zweite Teil mit einer zweiten vorbestimmten Breite ausgebildet ist und wobei die zweite Breite schmaler als die erste Breite ist.

13. Verfahren zum Befestigen eines Elementes nach Anspruch 12 mit dem Boden eines Fahrzeugs, wobei das Verfahren aufweist:
- Hinzufügen von Klebstoff an dem Boden und/oder der unteren Seite des Elementes,
- zwangsweises Annähern eines Elementes und des Bodens, um sicherzustellen, dass der Klebstoff in die oder jede Ausnehmung eintritt und über wenigstens dem ersten und dem zweiten Teil der oder jeder Ausnehmung liegt.

## Revendications

1. Plaque de plancher fixée sur le fond (28) d'un véhicule, la plaque de plancher comprenant un certain nombre d'éléments parallèles (10) positionnés les uns à côté des autres, dans laquelle au moins l'un des éléments parallèles présente un côté supérieur (12) et un côté inférieur (14), le côté supérieur ayant des moyens (16) permettant de le fixer sur ou de s'engager sur des sièges ou des marchandises, l'élément (10) étant, sur son côté inférieur (14), collé sur le fond (28) du véhicule,
**caractérisée en ce que** le au moins un élément (10) a, au niveau de ou sur son côté inférieur (14), au moins un évidement (22) qui s'étend en s'éloignant d'un plan général du côté inférieur (14) de l'élément (10), l'évidement (22) ayant une première partie, ayant une première largeur prédéterminée, et une seconde partie, ayant une seconde largeur prédéterminée et étant placée plus près du fond (28), la seconde largeur étant inférieure à la première largeur, et **en ce que**
une couche de colle fixant le ou les éléments (10) sur le fond s'étend dans l'évidement (22) et sur au moins la première et la seconde parties.

2. Plaque de plancher selon la revendication 1, dans laquelle le au moins un élément (10) est creux, et dans laquelle l'évidement (22) s'étend depuis le côté inférieur (14) de l'élément (10) et jusqu'à l'intérieur de l'élément creux.

3. Plaque de plancher selon la revendication 2, dans laquelle le caractère creux de l'élément (10) présente une surface interne (26) et où la première partie fait partie de la surface interne (26).

4. Plaque de plancher selon l'une quelconque des revendications précédentes, dans laquelle au moins un évidement (22), dans le plan, présente un certain nombre de paires d'une première partie et d'une seconde partie, et dans chaque paire de parties :
- la première partie présente une première largeur prédéterminée et la seconde partie présente une seconde largeur prédéterminée, la seconde largeur étant inférieure à la première largeur,
- la seconde partie est placée plus près du fond (28) que la première partie,
la colle s'étendant sur toutes les parties de toutes les paires.

5. Plaque de plancher selon l'une quelconque des revendications précédentes, dans laquelle l'évidement (22) est oblong, et dans laquelle au moins une paire d'une première et d'une seconde parties a une forme de protubérance oblongue/allongée (24) dans l'évidement (22).

6. Plaque de plancher selon l'une quelconque des revendications précédentes, dans laquelle la première largeur est au moins 5 % plus grande que la seconde largeur.

7. Plaque de plancher selon l'une quelconque des revendications précédentes, dans laquelle l'évidement (22) s'étend sur une profondeur prédéterminée dans l'élément (10), dans laquelle la profondeur est comprise entre 30 % et 300 % de la première largeur.

8. Plaque de plancher selon l'une quelconque des revendications précédentes, dans laquelle la première partie est placée à une première distance du plan général, dans laquelle la seconde partie est placée à une seconde distance du plan général, et dans laquelle une différence entre la première et la seconde distance est au plus égale à trois fois une différence entre la première et la seconde largeur.

9. Plaque de plancher selon l'une quelconque des revendications précédentes, dans laquelle un premier des au moins un élément (10) est fixé sur le fond (28) entre deux autres éléments (10), le premier élément (10) n'étant pas directement fixé sur ou engagé dans, ou touchant les deux autres éléments (10).

10. Plaque de plancher selon l'une quelconque des revendications précédentes, la plaque de plancher étant fixée sur le fond (28) avec au moins un élément de fixation (32) qui s'étend à travers le plancher (28) et dans au moins un évidement (22), l'élément de fixation (32) ayant une surface s'engageant dans les première et seconde parties.

11. Plaque de plancher selon l'une quelconque des revendications précédentes, dans laquelle la couche de colle a une dureté Shore A de 40 à 75.

12. Elément (10) destiné à une utilisation dans une plaque de plancher selon l'une quelconque des revendications précédentes, **caractérisé en ce que** l'élément (10) a un côté supérieur (12) et un côté inférieur (14) et son côté inférieur (14) a au moins un évidement (22) qui s'étend en s'éloignant d'un plan général du côté inférieur, l'évidement (22) ayant une première partie, ayant une première largeur prédéterminée, et une seconde partie qui est placée plus près du fond, la seconde partie ayant une seconde largeur prédéterminée, la seconde largeur étant inférieure à la première largeur.

13. Procédé de fixation d'un élément (10) selon la revendication 12 sur le fond (28) d'un véhicule, le procédé étant **caractérisé en ce que** :
- on ajoute de la colle sur le fond (28) et/ou le côté inférieur (14) de l'élément (10),
- on force l'élément (10) et le fond (28) en les poussant l'un vers l'autre afin d'être sûr que la colle pénètre dans le ou les évidements (22) et sur au moins la première et la seconde partie de l'évidement ou des évidements (22).
